# EUROPEAN PATENT SPECIFICATION

(11) **EP 2 439 122 B1**
(45) Date of publication and mention of the grant of the patent: **20.02.2013**
(21) Application number: 11183829.8
(22) Date of filing: 04.10.2011
(51) Int. Cl.: B60W 50/08, B60W 10/08, B60W 20/00, B60L 15/20, B60W 10/26

(54) **Control system of vehicle**
Steuerungssystem für ein Fahrzeug
Système de commande de véhicule

(30) Priority: 05.10.2010 JP 2010225936
(43) Date of publication of application: 11.04.2012
(73) Proprietor: Toyota Jidosha Kabushiki Kaisha, Toyota-shi, Aichi-ken 471-8571 (JP)
(72) Inventor: Toyora, Sachio, Toyota-shi, Aichi 471-8571 (JP); Tabata, Mitsuhiro, Toyota-shi, Aichi 471-8571 (JP); Takahashi, Tomoya, Toyota-shi, Aichi 471-8571 (JP); Murakami, Koji, Toyota-shi, Aichi 471-8571 (JP)
(74) Representative: TBK

(56) References cited:
- DE-A1- 4 324 010

## Description

### .BACKGROUND OF THE INVENTION

### 1. Field of the Invention

The invention relates to a control system of a vehicle which includes a mechanical power source using mechanical energy as power, and an electric power source using mechanical energy into which electrical energy is converted, as power, and which enables the driver to manually switch a running mode of the vehicle among an engine running mode using the mechanical power source, an EV running mode using the electric power source, and a hybrid running mode using the mechanical power source and the electric power source.

### 2. Description of Related Art

A vehicle having a mechanical power source and an electric power source as power sources for driving the driving wheels is known. For example, Japanese Patent Application Publication No. 2002-114048 (JP-A-2002-114048) discloses a vehicle using one electric motor (electric power source) as a power source for driving the driving wheels and a power source for starting the engine (mechanical power source). Japanese Patent Application Publication No. 2002-155965 (JP-A-2002-155965) discloses a technology of determining a connected or disconnected state of a clutch interposed between an engine and a transmission, without using a dedicated detection device, such as a sensor.

In a vehicle which has an EV running mode, a hybrid running mode and an engine running mode, and in which switching among these running modes is left to or depends on a manual operation performed by the driver, the running mode is not automatically switched from one mode to another; therefore, if the driver continues to wish to drive the vehicle in the EV running mode, the remaining capacity (SOC amount) of a secondary battery keeps decreasing.

### SUMMARY OF THE INVENTION

The invention provide a control system of a vehicle, which can curb reduction of the SOC amount in a vehicle in which switching among running modes such as an EV running mode and an engine running mode, is left to or depends on a manual operation performed by the driver.

One aspect of the invention is concerned with a control system of a vehicle. The control system includes an electric power source control device that performs output control of an electric power source in an EV running mode in which driving force is generated from power of the electric power source, with reference to an output permissible value corresponding to the EV running mode as an upper limit, and a running mode selecting device that enables a driver to manually select a desired running mode, from a plurality of the EV running modes each of which is set for each vehicle-speed region or each rotational-speed region of the electric power source, and a non-EV running mode in which the driving force is generated from power of a power source other than the electric power source, and a secondary battery connected to the electric power source can be recharged. In the control system, the output permissible value of the electric power source between adjacent ones of the EV running modes as viewed in a direction in which the vehicle speed or the rotational speed of the electric power source changes is set to a predetermined value that is lower than an output maximum value of the electric power source, and the output permissible value on the higher vehicle-speed side or the higher rotational-speed side of the electric power source in the EV running mode on the side of the lower vehicle-speed region or the lower rotational-speed region of the electric power source, as one of the adjacent EV running modes, is higher than the predetermined value, while the output permissible value on the lower vehicle-speed side or the lower rotational-speed side of the electric power source in the EV running mode on the side of the higher vehicle-speed region or the higher rotational-speed region of the electric power source, as one of the adjacent EV running modes, is higher than the predetermined value.

In the control system as described above, the predetermined value may be equal to 0 or nearly 0.

In the control system as described above, the output permissible value of the electric power source between the adjacent EV running modes may be equal to 0 or nearly 0 in a predetermined vehicle-speed range or a predetermined rotational-speed range of the electric power source.

In the control system as described above, the output permissible value of the electric power source in the EV running mode on the side of the lower vehicle-speed region or the lower rotational-speed region of the electric power source, as one of the adjacent EV running modes, may be reduced to 0 or nearly 0, at the higher vehicle-speed side or the higher rotational-speed side of the electric power source of the EV running mode on the side of the lower vehicle-speed region or the lower rotational-speed region, as the vehicle speed or the rotational speed of the electric power source approaches an upper-limit vehicle speed or an upper-limit rotational speed of the electric power source in the EV running mode on the side of the lower vehicle-speed region or the lower rotational-speed region.

In the control system as described above, the output permissible value of the electric power source in the EV running mode on the side of the higher vehicle-speed region or the higher rotational-speed region of the electric power source, as one of the adjacent EV running modes, may increase from 0 or nearly 0, at the lower vehicle-speed side or the lower rotational-speed side of the electric power source of the EV running mode on the side of the higher vehicle-speed region or the higher rotational-speed region, as the vehicle speed or the rotational speed of the electric power source increases from a lower-limit vehicle speed or a lower-limit rotational speed of the electric power source in the EV running mode on the side of the higher vehicle-speed region or the higher rotational-speed region.

In the control system as described above, the vehicle may include only one motor/generator as the electric power source.

The control system of the vehicle according to the above aspect of the invention sets the output permissible value of the electric power source between adjacent EV running modes to be equal to or smaller than the predetermined value (or 0 or nearly 0), so that the electric power source cannot generate power or can generate only small power when the vehicle speed increases to a vehicle speed (a rotational speed of the electric power source) at which the output permissible value is set to be equal to or smaller than the predetermined value (or 0 or nearly 0), resulting in an insufficiency of the vehicle acceleration relative to the accelerator pedal operation amount. In this case, even if the driver switches the running mode from the current EV running mode to an EV running mode of the next higher vehicle-speed region (rotational-speed region of the electric power source), the vehicle cannot generate power of the electric power source or can generate only small power since the output permissible value at the lower-limit vehicle speed (lower-limit rotational speed of the electric power source) in the newly established EV running mode is also equal to or smaller than the predetermined value (or 0 or nearly 0). In this case, therefore, switching from the current EV running mode to a non-EV running mode (such as an engine running mode) needs to be effected. Accordingly, the control system urges the driver to switch the running mode from the EV running mode to the non-EV the running mode, and the switching operation is performed by the driver, so that reduction of the remaining capacity (SOC amount) of the secondary battery can be curbed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG 1 is a view showing one example of hybrid vehicle to which a control system of a vehicle according to one embodiment of the invention is applied;
FIG. 2 is a view concerned with the embodiment of the invention, showing one example of gearshift operation device and EV running mode switching device when a neutral state is selected;
FIG 3 is a view concerned with the embodiment of the invention, showing one example of gearshift operation device and EV running mode switching device when a first EV running mode is selected;
FIG. 4 is a view concerned with the embodiment of the invention, showing one example of output permissible values in the respective EV running modes; and
FIG 5 is a view concerned with the embodiment of the invention, showing another example of output permissible values in the respective EV running modes.

### DETAILED DESCRIPTION OF EMBODIMENTS

A control system of a vehicle as one embodiment of the invention will be described in detail with reference to the drawings. It is to be understood that the invention should not be limited by this embodiment.

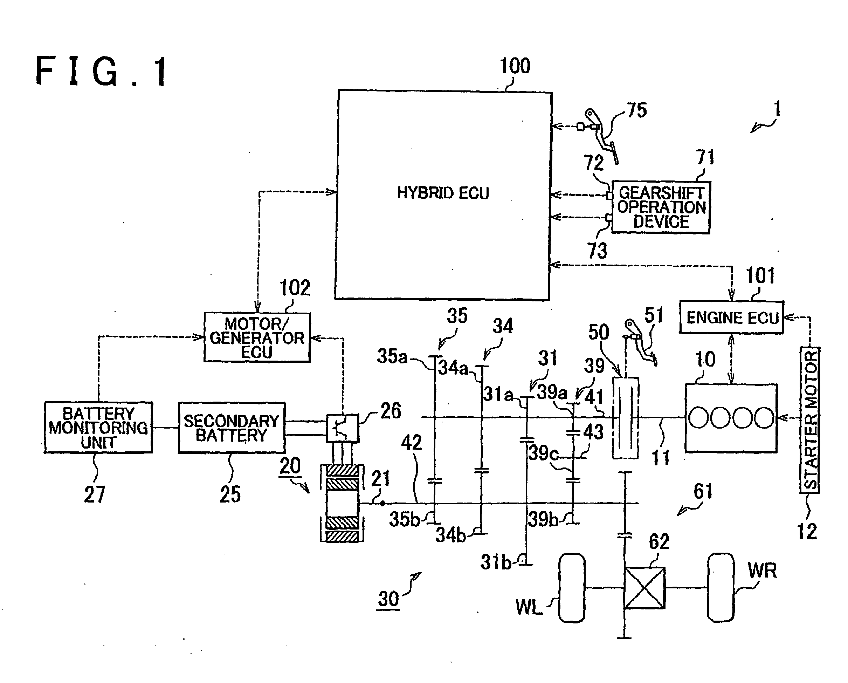

The control system of the vehicle according to the embodiment of the invention will be described with reference to FIG. 1 through FIG. 5.

The vehicle to which the control system according to the embodiment of the invention is applied is a hybrid vehicle including a mechanical power source using mechanical energy as power, and an electrical power source using mechanical energy into which electrical energy is converted, as power. The hybrid vehicle has an engine running mode in which the vehicle runs using only the power of the mechanical power source, two or more EV running modes in which the vehicle runs using only the power of the electrical power source, and a hybrid running mode in which the vehicle runs using both the mechanical power source and the electrical power source. In operation, the driver can manually switch the running mode among these three modes.

Initially, one example of the hybrid vehicle will be described with reference to FIG. 1. In FIG 1, reference numeral 1 denotes the hybrid vehicle of this embodiment.

The hybrid vehicle 1 includes an engine 10 that generates mechanical power (engine torque) from an output shaft (crankshaft) 11, as the mechanical power source. The engine 10 may be an internal combustion engine, or an external combustion engine, for example. The operation of the engine 10 is controlled by an electronic control unit (which will be called "engine ECU") 101 for the engine. The engine 10 is provided with a starter motor 12 that is controlled by the engine ECU 101 to be driven when the engine 10 is started. Here, the functions concerning engine control, which are performed by the engine ECU 101 and a hybrid ECU 100 (which will be described later); constitute an engine control device (mechanical power source control device).

The hybrid vehicle 1 includes a motor, or a generator that can be driven with power supplied thereto (i.e., a generator that can be driven in power running mode), or a motor/generator that can be driven in both power running mode and regeneration mode, as the electrical power source. In the following, a motor/generator 20 will be explained as an example of the electrical power source. The motor/generator 20 is in the form of, for example, a permanent magnet type alternating current synchronous electric motor, and the operation of the motor/generator 20 is controlled by an electronic control unit (which will be called "motor/generator ECU") 102 for the motor/generator. Here, the functions concerning motor/generator control, which are performed by the motor/generator ECU 102 and the hybrid ECU 100 (which will be described later), constitute a motor/generator control device (electrical power source control device). When the motor/generator 20 is driven in the power running mode, it functions as a motor (electric motor), and converts electrical energy supplied via a secondary battery 25 and an inverter.26 into mechanical energy, so as to generate mechanical power (powered motor torque) from a rotary shaft 21. The motor/generator 20 generates the powered motor torque with reference to a preset output permissible value as the upper limit. The output permissible value is equal to or smaller than the output maximum value of the motor/generator 20 which is determined in view of the specifications of the motor/generator 20, the remaining capacity or SOC of the secondary battery 25, and so forth. When the motor/generator 20 is driven in the regeneration mode, on the other hand, it functions as a generator, and converts mechanical energy into electrical energy when receiving mechanical power (motor regenerating torque) from the rotary shaft 21, so that the electrical energy transferred via the inverter 26 is stored in the secondary battery 25 as electric power.

The hybrid vehicle 1 is provided with a battery monitoring unit 27 that detects the state of charge (SOC) of the secondary battery 25. The battery monitoring unit 27 sends a signal concerning the detected state of charge of the secondary battery 25 (in other words, a signal concerning the remaining capacity (or the SOC amount)) to the motor/generator ECU 102. The motor/generator ECU 102 determines the state of charge of the secondary battery 25 based on the signal, and determines whether the secondary battery 25 needs recharging.

The hybrid vehicle 1 also includes a power transmission device comprised of a multiple-speed manual transmission 30, etc. The power transmission device is operable to transmit power (engine torque or powered motor torque) of the engine 10 or motor/generator 20, as driving force, to driving wheels WL, WR.

The manual transmission 30 has an input, shaft 41 that receives engine torque, and an output torque 42 that is disposed in parallel with the input shaft 41 with a spacing therebetween, and transmits the torque to the driving wheels WL, WR.

The engine torque is applied via a clutch 50 to the input shaft 41 of the manual transmission 30. The clutch 50 is, for example, a friction clutch device that is constructed such that it can switch between an engaged state in which the output shaft 11 of the engine 10 and the input shaft 41 are engaged with each other, and a released (disengaged) state in which the output shaft 11 and the input shaft 41 are released (disengaged) from the engaged state. The "engaged state" mentioned herein means a state or condition in which torque can be transmitted between the output shaft 11 and the input shaft 41, and the released (disengaged) state means a state or condition in which torque cannot be transmitted between the output shaft 11 and the input shaft 41. The operation to switch the clutch 50 between the engaged state and the released state is mechanically performed via a link mechanism, a wire, or the like, according to the driver's operation on a clutch pedal 51.

In this embodiment, the rotary shaft 21 of the motor/generator 20 is coupled to the output shaft 42 of the manual transmission 30. Accordingly, when the motor-generator 20 operates in the power running mode (i.e., when the motor-generator 20 is driven with power supplied thereto), the powered motor torque is transmitted to the manual transmission 30 via the output shaft 42. When the motor-generator 20 operates in the regeneration mode, on the other hand, the output torque is transmitted from the output shaft 42 to a rotor of the motor/generator 20.

The manual transmission 30 illustrated herein has three forward speeds and one reverse speed, and includes a first-speed gear set 31, a fourth-speed gear set 34 and a fifth-speed gear set 35 for the forward speeds, and a reverse gear set 39 for the reverse speed. The forward gears are arranged such that the speed ratio decreases in the order of the first-speed gear set 31, the fourth-speed gear set 34, and the fifth-speed gear set 35. For example, the speed ratios of the first-speed gear set 31, the fourth-speed gear set 34 and the fifth-speed gear set 35 respectively correspond to the speed ratios of a first-speed gear set, a fourth-speed gear set and a fifth-speed gear set of a manual transmission having five forward speeds. The construction of the manual transmission 30 is simply illustrated in FIG. 1, and the positions or arrangements of the gears for the respective speeds are not necessarily identical with those of FIG. 1.

In the power transmission device of this embodiment, when the clutch 50 is placed in the engaged state, the speed of the engine torque applied to the input shaft 41 is changed at a selected one of the speed ratios (at a selected one of the gear sets 31, 34, 35, 39), and the resulting torque is transmitted to the output shaft 42. Also, in the power transmission device, the powered motor torque is transmitted to the output shaft 42. In the power transmission device, the speed of the torque delivered from the output shaft 42 is reduced by a final reduction gear unit 61, and the resulting torque is transmitted as driving force to the driving wheels WL, WR, via a differential gear unit 62.

The first-speed gear set 31 consists of a pair of gears, i.e., a first-speed drive gear 31.a and a first-speed driven gear 31 b that are in mesh with each other. The first-speed drive gear 31a is disposed on the input shaft 41, while the first-speed driven gear 31b is disposed on the output shaft 42. Similarly, the fourth-speed gear set 34 has a fourth-speed drive gear 34a and a fourth-speed driven gear 34b, and the fifth-speed gear set 35 has a fifth-speed drive gear 35a and a fifth-speed driven gear 35b, like the first-speed gear set 31.

On the other hand, the reverse gear set 39 consists of a reverse drive gear 39a, a reverse driven gear 39b, and a reverse intermediate gear 39c. The reverse drive gear 39a is disposed on the input shaft 41, and the reverse driven gear 39b is disposed on the output shaft 42. Also, the reverse intermediate gear 39c is in mesh with the reverse drive gear 39a and the reverse driven gear 39b, and is disposed on a rotary shaft 43.

With the manual transmission 30 thus constructed, a selected one of the drive gears for the respective speeds is arranged to rotate as a unit with the input shaft 41, while the remaining drive gears are arranged to rotate relative to the input shaft 41. Also, a selected one of the driven gears for the respective speeds is arranged to rotate as a unit with the output shaft 42, while the remaining driven gears are arranged to rotate relative to the output shaft 42.

Also, sleeves (not shown) that move in the axial direction according to a gearshift operation of the driver are mounted on the input shaft 41 and the output shaft 42. Each sleeve on the input shaft 41 is disposed between respective drive gears for two speeds, which can rotate relative to the input shaft 41. On the other hand, each sleeve on the output shaft 42 is disposed between respective driven gears for two speeds, which can rotate relative to the output shaft 42. When the driver operates a gearshift operation device 71, the sleeve moves in the axial direction via a link mechanism or fork (not shown) coupled to the gearshift operation device 71. Then, the sleeve that has moved causes the relatively rotatable drive gear or driven gear that is located in the direction in which the sleeve is moved, to rotate as a unit with the input shaft 41 or the output shaft 42, respectively. In the manual transmission 30, the sleeve moves in a direction corresponding to the gearshift operation performed by the driver on the gearshift operation device 71, so that switching or shifting to the speed corresponding to the gearshift operation or switching to a neutral state (i.e., a state in which torque cannot be transmitted between the input shaft 41 and the output torque 42) is carried out.

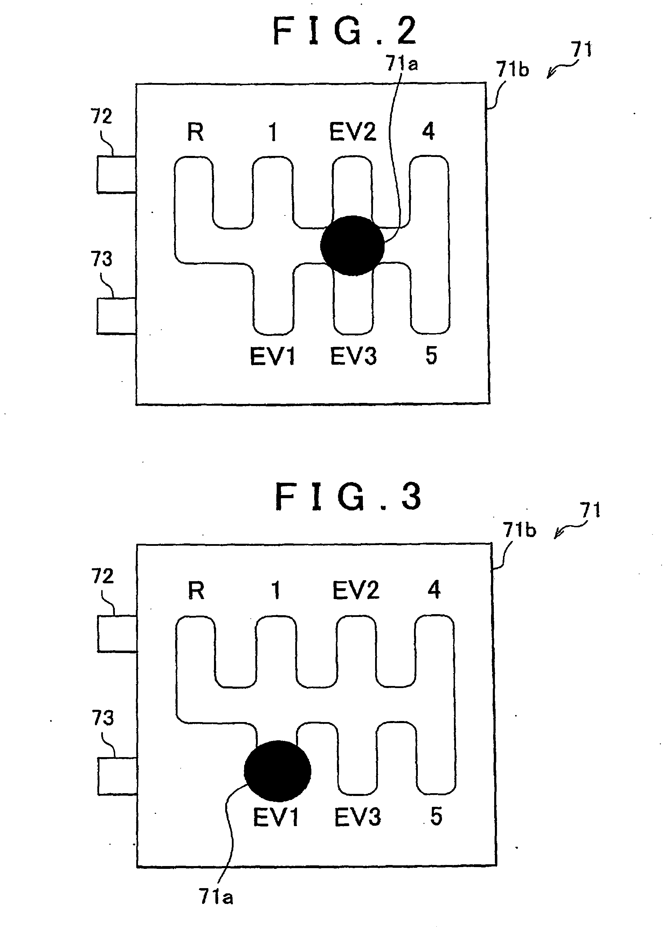

As shown in FIG. 2, the gearshift operation device 71 includes a shift lever 71 a used when the driver performs a gearshift operation, a so-called shift gauge 71b that guides the shift lever 71a to shift ranges for the respective speeds, and the above-mentioned link mechanism or fork; for example. FIG. 2 shows the position of the shift lever 71 a when the manual transmission 30 is operated or brought into a neutral state. In FIG 2, "1", "4", "5" and "R" on the shift gauge 71b represent the shift positions (select positions) for selecting the first-speed gear set 31, the fourth-speed gear set 34, the fifth-speed gear set 35, and the reverse gear set 39, respectively.

For the hybrid vehicle 1 as described above, at least the engine running mode, three types of EV running modes, and the hybrid running mode are prepared as its running modes.

When the shift lever 71a is placed in any one of the shift positions 1, 4, 5 and R on the shift gauge 71 b, the hybrid vehicle 1 operates in the engine running mode or the hybrid running mode, namely, one of the engine running mode and the hybrid running mode is selected.

When any one of the EV running modes is selected, on the other hand, the hybrid vehicle 1. uses an EV running mode switching device that is operable by the driver. Here, the gearshift operation device 71 has the function of the EV running mode switching device. Namely, the gearshift operation device 71 of this embodiment does not only enable the driver to change the speed ratio of or shift the manual transmission 30, but also functions as the EV running mode switching device when the driver switches the running mode to one of the EV running modes. For example, the gearshift operation device 71 has a first EV running mode select position EV1 for switching to the first EV running mode, a second EV running mode select position EV2 for switching to the second EV running mode, and a third EV running mode select position EV3 for switching to the third EV running mode, on the shift gauge 71b, as select positions of the shift lever 71a like the shift positions 1, 4, 5, R. In the hybrid vehicle 1 of this embodiment, when the shift lever 71a is operated to the first EV running mode select position EV1 as shown in FIG. 3, the running mode turns into the first EV running mode. Similarly, when the shift lever 71a is operated to the second EV running mode select position EV2, the running mode turns into the second EV running mode. When the shift lever 71a is operated to the third EV running mode select position EV3, the running mode turns into the third EV running mode. In the hybrid vehicle 1 of this embodiment, when the shift lever 71a is operated to the first EV running mode select position EV1, the second EV running mode select position EV2, or the third EV running mode select position EV3, the manual transmission 30 is brought into a neutral state via the sleeves.

The gearshift operation device 71 is provided with an EV running mode select position detecting unit 72 that detects whether the shift lever 71a is placed in the first EV running mode select position EV1, or placed in the second EV running mode select position EV2, or placed in the third EV running mode select position EV3. The EV running mode select position detecting unit 72 is, for example, a positional information detection sensor, or the like, which can detect whether the shift lever 7 1 a is in the first EV running mode select position EV1, the second EV running mode select position EV2, or the third EV running mode select position EV3, and makes it possible to determine that the shift lever 71a is in the first EV running mode select position EV1, or the second EV running mode select position EV2, or the third EV running mode select position EV3. A detection signal of the EV running mode select position detecting unit 72 is transmitted to the electronic control device (which will be called "hybrid ECU") 100 that comprehensively controls the operation of the whole vehicle.

The hybrid ECU 100 sends and receives information, such as detection signals of various sensors, and control commands, to and from the engine ECU 101 and the motor/generator ECU 102. In this embodiment, at least the hybrid ECU 100, the engine ECU 101, and the motor/generator ECU 102 constitute the control system of the vehicle.

The gearshift operation device 71 is also provided with a shift position detecting unit 73 that detects which of the shift positions or ranges 1, 4, 5, R on the shift gauge 71b in which the shift lever 71a is placed, namely, which of the speeds is selected by the driver. The shift position detecting unit 73 may use a positional information detection sensor, or the like, which can detect which of the shift positions 1, 4, 5, R in which the shift lever 71a is placed, for example. The detection signal of the sensor is transmitted to the hybrid ECU 100. The hybrid ECU 100 determines the speed selected by the driver, and the current speed, based on the detection signal. While the shift position detecting unit 73 is illustrated as another or different unit from the EV running mode select position detecting unit 72, for the sake of convenience, these detecting units 72, 73 may be replaced by a shift-lever position detecting unit (not shown) into which the units 72, 73 are integrated. Here, the hybrid ECU 100 may estimate the current speed from the engine torque, the wheel speed, and so forth, using a known technology that is known in the technical field of the invention.

**.** When the shift lever 71a is operated to one of the shift positions 1, 4, 5, R, the hybrid ECU 100 selects one of the engine running mode and the hybrid running mode. For example, the hybrid ECU 100 switches the running mode between the engine running mode and the hybrid running mode, based on a drive request made by the driver (required driving force), information (the SOC amount) on the state of charge of the secondary battery 25 transmitted from the motor/generator ECU 102, and information on vehicle running conditions (e.g., information, such as the vehicle lateral acceleration detected by a vehicle lateral acceleration detection device (not shown), and slipping conditions of the driving wheels WL, WR detected by a wheel slip detection device).

When the hybrid ECU 100 selects the engine running mode, it sends control commands to the engine ECU 101 and the motor/generator ECU 102, so as to generate the required driving force using only the engine torque. In this case, information of engine torque that satisfies the required driving force in the current speed or the speed to be established after the gearshift operation, for example, is transmitted as a control command to the engine ECU 101. As a result, the engine ECU 101 controls the fuel injection amount of the engine 10, etc., so as to cause the engine 10 to generate the engine torque. On the other hand, a control command for inhibiting the motor/generator 20 from operating as a motor and a generator is sent to the motor/generator ECU 102. Thus, the engine running mode may be referred to as a non-EV running mode in which driving force is generated with power other than that produced by the motor/generator 20, and the secondary battery 25 connected to the motor/generator 20 can be charged.

When the hybrid ECU 100 selects the hybrid running mode, on the other hand, it sends control commands to the engine ECU 101 and the motor/generator ECU 102, so that the required driving force is generated using the engine torque and the output of the motor/generator 20 that operates as a motor or a generator. In this case, when the engine torque and the powered motor torque are both used, information of engine torque and powered motor torque that satisfy the required driving force in the current speed or the speed to be established after the gearshift operation, for example, is transmitted as control commands to the engine ECU 101 and the motor/generator ECU 102. As a result, the engine ECU 101 controls the engine 10 so that the engine 10 generates the engine torque, and the motor/generator ECU 102 controls the amount of electric power supplied to the motor/generator 20 so that the motor/generator 20 generates the powered motor torque. Also, when the motor/generator 20 is used for regenerating electric power, a control command for operating the motor/generator 20 as a generator is sent to the motor/generator ECU 102. At this time, information of engine torque increased by an amount corresponding to the motor regeneration torque is sent to the engine ECU 101, for example. The hybrid running mode at the time of the regeneration control may be referred to as a non-EV running mode in which driving force is generated using power other than that of the motor/generator 20, and the secondary battery 25 connected to the motor/generator 20 can be charged.

When the shift lever 71a is operated to any one of the first to third EV running mode select positions EV1, EV2, EV3, the hybrid ECU 100 sends control commands to the engine ECU 101 and the motor/generator ECU 102, so that the required driving force is generated using only the powered motor torque. In this case, information of powered motor torque that satisfies the required driving force is sent as a control command to the motor/generator ECU 102. In this embodiment, the first EV running mode is set so as to be used in a vehicle-speed region, or a vehicle-speed range (a motor speed region, or a motor speed range) at the time of starting of the vehicle, and the second EV running mode is set so as to be used in a low vehicle-speed region (a low motor-speed region) following the starting of the vehicle, while the third EV running mode is set so as to be used in a middle vehicle-speed or higher vehicle-speed region (a middle motor-speed region or higher motor-speed region). Therefore, the output permissible value of the powered motor torque decreases in the order of the first EV running mode (EV1), the second EV running mode (EV2), and the third EV running mode (EV3). In the meantime, if the engine 10 is running while the manual transmission 30 is in the neutral state, the fuel efficiency is deteriorated; therefore, a control command for stopping the operation of the engine 10 is sent to the engine ECU 101 so as to improve the fuel efficiency. Furthermore, in the first, second or third EV running mode, when the driver releases his/her foot from the accelerator pedal 75 or performs a braking operation, or the like, to make a request for deceleration of the hybrid vehicle 1, a control command for permitting regenerative braking may be sent to the motor/generator ECU 102. The "vehicle-speed region at the time of starting" as mentioned above includes not only vehicle speeds detected until the vehicle finishes its starting operation, but also vehicle speeds detected during slow driving. The "low vehicle-speed region" represents vehicle speeds that are equal to or higher than the vehicle-speed region at the time of starting, and are generally within the range of legal speeds in urban areas or city streets, for example. The "middle vehicle-speed region" represents vehicle speeds that are equal to or higher than the low vehicle-speed region, and are detected during steady-state running in suburban areas, for example.

In the hybrid vehicle 1 of this embodiment, switching among the above-indicated various running modes is effected at the moment when the driver operates the clutch 50 and operates the gearshift operation device 71. Namely, the clutch 50, clutch pedal 51 and gearshift operation device 71 of this embodiment may be referred to as a running mode selecting device that enables the driver to manually select the running mode. In order to switch the running mode from the engine running mode or hybrid running mode to the first, second, or third EV running mode, the driver performs an operation to release the clutch 50, operates the shift lever 71a from the shift position 1, 4, 5, or R to one of the first to third EV running mode select positions EV1, EV2 and EV3, and performs an operation to engage the clutch 50, in the order of description. At this time, the detection signal received by the hybrid ECU 100 changes from the detection signal of the shift position detecting unit 73 to the detection signal of the EV running mode select position detecting unit 72. On the other hand, in order to switch the running mode from the first, second or third EV running mode to the engine running mode or hybrid running mode, the driver performs an operation to release the clutch 50, operates the shift lever 71a from one of the first to third EV running mode select positions EV1, EV2, EV3 to the shift position 1, 4, or 5, and performs an operation to engage the clutch 50, in the order of description. At this time, the detection signal received by the hybrid ECU 100 changes from the detection signal of the EV running mode select position detecting unit 72 to the detection signal of the shift position detecting unit 73.

In the hybrid vehicle 1 of this type, switching of the running mode is left to or depends on the manual operation of the driver; therefore, if the driver continues to wish to drive the vehicle in the EV running mode, the remaining capacity (SOC amount) of the secondary battery 25 keeps decreasing. In particular, the hybrid vehicle 1 is provided with two or more EV running modes (the first to third EV running modes) corresponding to respective regions or ranges of the vehicle speed (motor speed), and the vehicle may run in one of the EV running modes from the time when the vehicle is started, to the time when the vehicle runs at a middle speed or a high speed. Therefore, there are many running conditions or circumstances where the driver need not select the engine running mode, which may result in reduction of the SOC amount due to the continued running in the EV running mode. One of the factors that cause the reduction of the SOC amount is that the hybrid vehicle 1 is not equipped with any generator other than the motor/generator 20. Namely, since the hybrid vehicle 1 has only one motor/generator 20, running and power generation cannot be simultaneously performed when the vehicle runs in the EV running mode. Accordingly, the hybrid vehicle 1 may suffer from degradation of the secondary battery 25 due to the reduction of the SOC amount.

In view of the above situation, the control system of the hybrid vehicle 1 is configured to urge the driver who is selecting the EV running mode to switch the running mode to the engine running mode or hybrid running mode in which the secondary battery 25 can be recharged.

More specifically, in the control system of this embodiment, the output permissible value of the motor/generator 20 between adjacent EV running modes as viewed in the direction in which the vehicle speed V (motor speed Nmg) increases and decreases (i.e., the direction in which the vehicle speed V changes) is set to 0 or nearly 0, so that the vehicle-speed regions (motor-speed regions) of the respective EV running modes do not overlap each other.

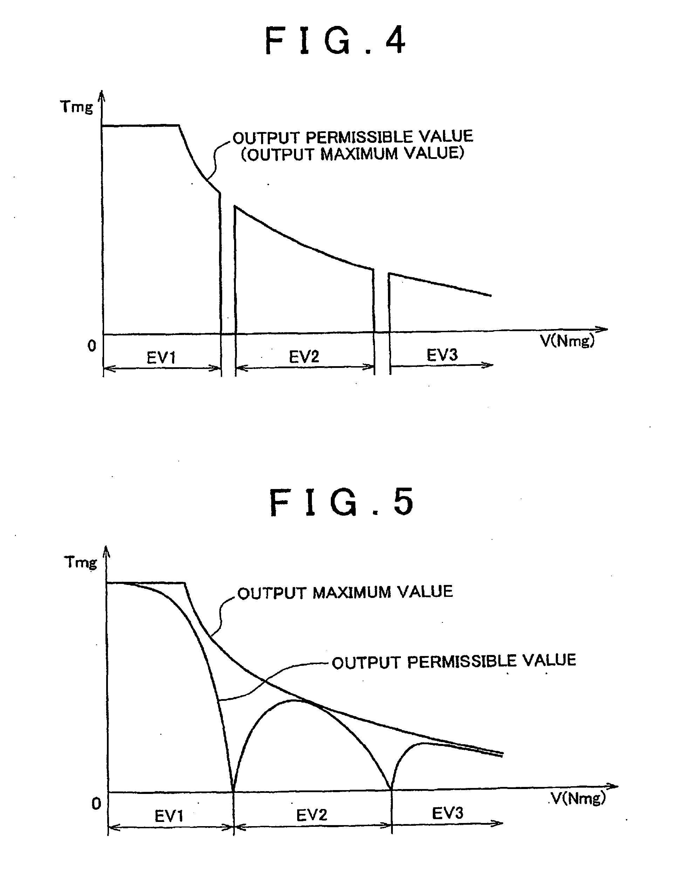

FIG. 4 shows an example in which the output permissible value between the first EV running mode (EV1) and the second EV running mode (EV2) and the output permissible value between the second EV running mode (EV2) and the third EV running mode (EV3) are set to 0. The output permissible value of FIG. 4 is of the same magnitude as the output maximum value of the motor/generator 20.

By setting the output permissible value between the adjacent EV running modes to 0, the motor/generator 20 cannot generate powered motor torque Tmg in the region between the adjacent EV running modes. Therefore, when the vehicle speed V (motor speed Nmg) increases until it reaches the region, the driver senses an insufficiency of the vehicle acceleration relative to the accelerator pedal position, i.e., the amount of the driver's operation on the accelerator pedal. The same or similar effect can be obtained when the output permissible value is equal to or smaller than a predetermined value (or nearly 0), and the predetermined value may be set to a value that is equal to or smaller than the powered motor torque Tmg which enables the driver to sense an insufficiency of the vehicle acceleration relative to the accelerator pedal position (the amount of the driver's operation on the accelerator pedal). The value that is equal to or smaller than the predetermined value (or nearly 0) is preferably determined on a road other than a downhill road on which the vehicle is accelerated due to the influence of gravity, most preferably, on a flat road.

Under the situation where the driver senses the insufficiency of the vehicle acceleration (the insufficiency of torque), it is necessary to perform a switching operation from the current EV running mode (one of the first to third EV running modes) to another running mode (selected from the engine running mode and the hybrid running mode, as well as the other EV running modes), and the driver also feels the necessity of switching. In the hybrid vehicle 1 of this embodiment in which the output permissible value of the motor/generator 20 between the adjacent EV running modes is equal to 0 or nearly 0, even if the running mode is switched to the EV running mode corresponding to the next higher vehicle-speed region, the output permissible value remains 0 or nearly 0, and, consequently, the driver is kept sensing the insufficiency of the vehicle acceleration (insufficiency of torque). Therefore, in order to eliminate the insufficiency of the vehicle acceleration, it is necessary to switch the running mode to the engine running mode or hybrid running mode in which the power of the engine 10 can be used. Namely, the driver who has performed the switching operation between the EV running modes, or the driver who has experienced the switching operation in the past knows the need to switch the running mode from the current EV running mode to the engine running mode or hybrid running mode. Thus, by setting the output permissible value between the adjacent EV running modes to 0 or nearly 0, the control system can urge the driver to perform the switching operation from the current EV running mode to the engine running mode or hybrid running mode. If the driver does not perform the switching operation in spite of the urge, the hybrid vehicle 1 is less likely or unlikely to be accelerated up to the vehicle-speed region immediately higher than the current vehicle-speed region even if the upper-limit vehicle speed of the current EV running mode can be maintained, unless particular conditions, such as a downhill road, are all satisfied, resulting in deterioration of the efficiency or ease with which the driver operates the vehicle. Thus, since the control system may be said to cause the driver to perform the switching operation, it is possible to curb reduction of the SOC amount, through charging of the secondary battery 25 after switching of the running mode, and thereby suppress deterioration of the secondary battery 25 while keeping high efficiency or ease with which the driver operates the vehicle.

The output permissible value of FIG. 4 splits the output maximum value of the motor/generator 20 at motor speeds (motor-speed regions) between adjacent EV running modes (vehicle-speed regions of adjacent EV running modes). Therefore, in the motor-speed region between the respective EV running modes, the output permissible value decreases from the output maximum value to 0 or nearly 0 when the vehicle speed increases to the upper-limit vehicle speed in the EV running mode on the side of the lower vehicle-speed region (lower motor-speed region), and the output permissible value increases from 0 or nearly 0 to the output maximum value when the vehicle speed increases to the lower-limit vehicle speed of the EV running mode on the side of the higher vehicle-speed region (higher motor-speed region). Accordingly, it is desirable to set the output permissible value between the respective EV running modes to 0 or nearly 0 only over a predetermined vehicle-speed region (motor-speed region). The width of the predetermined vehicle-speed region or vehicle-speed range (motor-speed region or motor-speed range) needs to be set to a value that enables the driver to sense the insufficiency of the vehicle acceleration as described above. For example, the width of the predetermined vehicle-speed region or motor-speed region is preferably set to a value that enables the driver to sense the insufficiency of the vehicle acceleration even on a low-gradient downhill road having a small influence of acceleration due to gravity.

As described above, the output permissible value of FIG. 4 decreases from the output maximum value to 0 or nearly 0 at the upper-limit vehicle speed of the EV running mode on the side of the lower vehicle-speed region (the lower motor-speed region), and increases from 0 or nearly 0 to the output maximum value at the low-limit vehicle speed of the EV running mode on the side of the higher vehicle-speed region (the higher motor-speed region). Therefore, torque fluctuations resulting from the reduction and increase of the output permissible value may impair the operability of the vehicle, driven by the driver and the driving comfort. In particular, the torque fluctuations are large at lower vehicle speeds; therefore, deterioration of the vehicle operability, etc. is more noticeable or significant at relatively low vehicle speeds.

Therefore, as shown in FIG. 5, the output permissible value in the EV running mode on the side of the lower vehicle-speed region (the lower motor-speed region), as one of the adjacent EV running modes, may be set so as to gradually decrease to 0 or nearly 0 as the vehicle speed (motor speed) approaches the upper-limit vehicle speed (the upper-limit motor speed) on the higher vehicle-speed side (the higher motor-speed side) in the above-indicated EV running mode. With this arrangement, the control system is free from or less likely to suffer from abrupt torque fluctuations due to rapid reduction of the powered motor torque during increase of the vehicle speed. Also, since the degree of insufficiency of the vehicle acceleration relative to the accelerator pedal operation amount can be gradually increased, the control system enables the driver to be notified little by little of the insufficiency of the vehicle acceleration. Namely, the control system can urge the driver to perform an operation to switch the running mode from the current EV running mode to the engine running mode or hybrid running mode, before the output permissible value of the EV running mode becomes equal to 0 or nearly 0.

In addition to the setting of the output permissible value in the EV running mode on the side of the lower vehicle-speed region (the lower motor-speed region), the output permissible value in the EV running mode on the side of the higher vehicle-speed region (the higher motor-speed region), as one of the adjacent EV running modes, may be set as follows, As shown in FIG. 5, the output permissible value in the EV running mode on the side of the higher vehicle-speed region (the higher motor-speed region) is set so as to gradually increase from 0 or nearly 0 at the lower-limit vehicle speed (lower-limit motor speed) on the lower vehicle-speed side (the lower motor-vehicle side) in the above-indicated EV running mode. With this arrangement, the control system is free from or less likely to suffer from abrupt torque fluctuations due to rapid increase of the powered motor torque during increase of the vehicle speed. The lower-limit vehicle speed (the lower-limit motor speed) of the EV running mode on the side of the higher vehicle-speed region (the higher motor-speed region) may be greater than the upper-limit vehicle speed (the upper-limit motor speed) of the EV running mode on the side of the lower vehicle-speed region (the lower motor-speed region), or may be equal to the upper-limit vehicle speed (the upper-limit motor speed).

Thus, the output permissible value of FIG 5 makes it possible to suppress deterioration of the operability of the vehicle driven by the driver and the driving comfort due to abrupt torque fluctuations. Also, when the running mode is switched to the EV running mode of the next higher vehicle-speed region before the output permissible value of the current EV running mode becomes equal to 0 or nearly 0, the output permissible value of FIG. 5 inhibits the powered motor torque from being generated in the newly established EV running mode. Therefore, the driver is notified of the need to switch the running mode from the current EV running mode to the engine running mode or hybrid running mode. In the example of FIG. 5, when the running mode is switched from the current EV running mode to the EV running mode of the next higher vehicle-speed region after the output permissible value of the current EV running mode becomes equal to 0 or nearly 0, the output permissible value of the newly established EV running mode is 0 or nearly 0, and therefore, it is difficult to increase the speed of the vehicle to the further higher vehicle-speed region unless particular conditions, such as a downhill road, are all satisfied, even if the upper-limit vehicle speed of the current EV running mode can be maintained, resulting in deterioration in the operability of the vehicle driven by the driver. Therefore, in this case, too, the driver is notified of the need to switch the running mode from the current EV running mode to the engine running mode or hybrid running mode. Accordingly, the control system may be said to be able to cause the driver to perform such a switching operation, thus making it possible to curb reduction of the SOC amount, through charging of the secondary battery 25 after switching of the running mode, and thereby suppress degradation of the secondary battery 25 while suppressing deterioration of the driving comfort due to abrupt torque fluctuations and keeping good operability of the vehicle driven by the driver.

As described above, the control system of the vehicle according to the present invention is useful to the technology of curbing reduction of the SOC amount due to continued operation in the EV running mode, in the vehicle in which switching among running modes, such as EV running modes and engine running mode, is left to or depends on the manual operation of the driver.

## Claims

1. A control system of a vehicle (1); comprising:
an electric power source control device that performs output control of an electric power source (20) in an EV running mode in which driving force is generated from power of the electric power source (20), with reference to an output permissible value corresponding to the EV running mode as an upper limit; and
a running mode selecting device that enables a driver to manually select a desired running mode, from a plurality of the EV running modes (EV1, EV2, EV3) each of which is set for each vehicle-speed region or each rotational-speed region of the electric power source (20), and a non-EV running mode in which the driving force is generated from power of a power source other than the electric power source (20), and a secondary battery (25) connected to the electric power source (20) can be recharged, wherein:
the output permissible value of the electric power source (20) between adjacent ones of the EV running modes (EV1, EV2, EV3) as viewed in a direction in which the vehicle speed or the rotational speed of the electric power source (20) changes is set to a predetermined value that is lower than an output maximum value of the electric power source (20);
the output permissible value on the higher vehicle-speed side or the higher rotational-speed side of the electric power source (20) in the EV running mode on the side of the lower vehicle-speed region or the lower rotational-speed region of the electric power source (20), as one of the adjacent EV running modes, is higher than the predetermined value; and
the output permissible value on the lower vehicle-speed side or the lower rotational-speed side of the electric power source (20) in the EV running mode on the side of the higher vehicle-speed region or the higher rotational-speed region of the electric power source (20), as one of the adjacent EV running modes, is higher than the predetermined value.

2. The control system (1) according to claim 1, wherein the predetermined value is equal to 0 or nearly 0.

3. The control system according to claim 2, wherein the output permissible value of the electric power source (20) between the adjacent EV running modes is equal to 0 or nearly 0 in a predetermined vehicle-speed range or a predetermined rotational-speed range of the electric power source (20).

4. The control system (1) according to claim 1, wherein the output permissible value of the electric power source (20) in the EV running mode on the side of the lower vehicle-speed region or the lower rotational-speed region of the electric power source (20), as one of the adjacent EV running modes, is reduced to 0 or nearly 0, at the higher vehicle-speed side or the higher rotational-speed side of the electric power source (20) of the EV running mode on the side of the lower vehicle-speed region or the lower rotational-speed region, as the vehicle speed or the rotational speed of the electric power source (20) approaches an upper-limit vehicle speed or an upper-limit rotational speed of the electric power source (20) in the EV running mode on the side of the lower vehicle-speed region or the lower rotational-speed region.

5. The control system (1) according to claim 4, wherein the output permissible value of the electric power source (20) in the EV running mode on the side of the higher vehicle-speed region or the higher rotational-speed region of the electric power source (20), as one of the adjacent EV running modes, increases from 0 or nearly 0, at the lower vehicle-speed side or the lower rotational-speed side of the electric power source (20) of the EV running mode on the side of the higher vehicle-speed region or the higher rotational-speed region, as the vehicle speed or the rotational speed of the electric power source (20) increases from a lower-limit vehicle speed or a lower-limit rotational speed of the electric power (20) source in the EV running mode on the side of the higher vehicle-speed region or the higher rotational-speed region.

6. The control system according to any one of claims 1 to 5, wherein the vehicle includes only one motor/generator (20) as the electric power source (20).

## Patentansprüche

1. Steuerungssystem für ein Fahrzeug (1), mit:
einer Steuerungsvorrichtung einer elektrischen Kraftquelle, die eine Ausgabesteuerung einer elektrischen Kraftquelle (20) in einem EV-Betriebsmodus, in dem eine Antriebskraft aus Kraft der elektrischen Kraftquelle (20) erzeugt wird, bezüglich eines zulässigen Ausgabewerts durchführt, der sich auf den EV-Betriebsmodus als eine obere Grenze bezieht; und
einer Betriebsmoduswahlvorrichtung, die es einem Fahrer erlaubt, einen gewünschten Betriebsmodus manuell aus einer Vielzahl von EV-Betriebsmodi (EV1, EV2, EV3), wobei jeder von diesen für jeden Fahrzeuggeschwindigkeitsbereich oder jeden Drehzahlbereich der elektrischen Kraftquelle (20) festgesetzt ist, und einem nicht EV-Betriebsmodus auszuwählen, in dem die Antriebskraft von einer Kraft einer von der elektrischen Kraftquelle (20) verschiedenen Kraftquelle erzeugt wird und eine sekundäre Batterie (25), die mit der elektrischen Kraftquelle (20) verbunden ist, wieder aufgeladen werden kann, wobei:
der zulässige Ausgabewert der elektrischen Kraftquelle (20) zwischen benachbarten EV-Betriebsmodi (EV1, EV2, EV3), in einer Richtung betrachtet, in der die Fahrzeuggeschwindigkeit oder die Drehzahl der elektrischen Kraftquelle (20) sich verändert, auf einen vorherbestimmten Wert festgesetzt ist, der niedriger ist als ein maximaler Ausgabewert der elektrischen Kraftquelle (20);
der zulässige Ausgabewert auf der höheren Fahrzeuggeschwindigkeitsseite oder der höheren Drehzahlseite der elektrischen Kraftquelle (20) in dem EV-Betriebsmodus auf der Seite des niedrigen Fahrzeuggeschwindigkeitsbereichs oder des niedrigen Drehzahlbereichs der elektrischen Kraftquelle (20), als einer der benachbarten EV-Betriebsmodi, höher ist als der vorherbestimmte Wert; und
der zulässige Ausgabewert auf der unteren Fahrzeuggeschwindigkeitsseite oder der unteren Drehzahlseite der elektrischen Kraftquelle (20) in dem EV-Betriebsmodus auf der Seite des höheren Fahrzeuggeschwindigkeitsbereichs oder des höheren Drehzahlbereichs der elektrischen Kraftquelle (20), als einer der benachbarten EV-Betriebsmodi, höher ist als der vorherbestimmte Wert.

2. Steuerungssystem (1) nach Anspruch 1, wobei der vorherbestimmte Wert gleich null oder nahe null ist.

3. Steuerungssystem nach Anspruch 2, wobei der zulässige Ausgabewert der elektrischen Kraftquelle (20) zwischen den benachbarten EV-Betriebsmodi gleich null oder nahe null in einem vorherbestimmten Fahrzeuggeschwindigkeitsbereich oder einem vorherbestimmten Drehzahlbereich der elektrischen Kraftquelle (20) ist.

4. Steuerungssystem (1) nach Anspruch 1, wobei der zulässige Ausgabewert der elektrischen Kraftquelle (20) in dem EV-Betriebsmodus auf der Seite des unteren Fahrzeuggeschwindigkeitsbereichs oder des unteren Drehzahlbereichs der elektrischen Kraftquelle (20), als einer der benachbarten EV-Betriebsmodi, an der höheren Fahrzeuggeschwindigkeitsseite oder der höheren Drehzahlseite der elektrischen Kraftquelle (20) des EV-Betriebsmodus auf der Seite des unteren Fahrzeuggeschwindigkeitsbereichs oder des unteren Drehzahlbereichs auf null oder nahe null reduziert wird, sobald sich die Fahrzeuggeschwindigkeit oder Drehzahl der elektrischen Kraftquelle (20) einer oberen Fahrzeuggeschwindigkeitsgrenze oder einer oberen Drehzahlgrenze der elektrischen Kraftquelle (20) in dem EV-Betriebsmodus auf der Seite des unteren Fahrzeuggeschwindigkeitsbereichs oder des unteren Drehzahlbereichs nähert.

5. Steuerungssystem (1) nach Anspruch 4, wobei der zulässige Ausgabewert der elektrischen Kraftquelle (20) in dem EV-Betriebsmodus auf der Seite des höheren Fahrzeuggeschwindigkeitsbereichs oder des höheren Drehzahlbereichs der elektrischen Kraftquelle (20), als einer der benachbarten EV-Betriebsmodi, an der unteren Fahrzeuggeschwindigkeitsseite oder der unteren Drehzahlseite der elektrischen Kraftquelle (20) des EV-Betriebsmodus auf der Seite des höheren Fahrzeuggeschwindigkeitsbereichs oder des höheren Drehzahlbereichs von null oder nahe null ansteigt, sobald die Fahrzeuggeschwindigkeit oder die Drehzahl der elektrischen Kraftquelle (20) von einer unteren Fahrzeuggeschwindigkeitsgrenze oder einer unteren Drehzahlgrenze der elektrischen Kraftquelle (20) in dem EV-Betriebsmodus auf der Seite des höheren Fahrzeuggeschwindigkeitsbereichs oder des höheren Drehzahlbereichs ansteigt.

6. Steuerungssystem nach einem der Ansprüche 1 bis 5, wobei das Fahrzeug nur einen Motor/Generator (20) als die elektrische Kraftquelle (20) enthält.

## Revendications

1. Système de commande d'un véhicule (1), comprenant :
un dispositif de commande de source d'énergie électrique qui effectue la commande de sortie d'une source d'énergie électrique (20) dans un mode de fonctionnement en véhicule électrique (EV pour « Electric Vehicle ») dans lequel la force motrice est engendrée à partir de l'énergie de la source d'énergie électrique (20), en se référant à une valeur de sortie admissible correspondant au mode de fonctionnement EV en tant que limite supérieure ; et
un dispositif de choix de mode de fonctionnement qui permet au conducteur de choisir manuellement un mode de fonctionnement voulu, parmi une pluralité de modes de fonctionnement EV (EV1, EV2, EV3) dont chacun a été fixé pour chaque région de vitesse de véhicule ou chaque région de vitesse de rotation de la source d'énergie électrique (20), et un mode de fonctionnement non EV dans lequel la force motrice est engendrée à partir de l'énergie d'une source d'énergie autre que la source d'énergie électrique (20), et dans lequel une batterie secondaire (25) connectée à la source d'énergie électrique (20) peut être rechargée,
dans lequel la valeur de sortie admissible de la source d'énergie électrique (20) entre des modes adjacents des modes de fonctionnement EV (EV1, EV2, EV3) vue que dans le sens dans lequel varie la vitesse de véhicule ou la vitesse de rotation de la source d'énergie électrique (20) est fixée à une valeur prédéterminée qui est plus basse que la valeur maximale de sortie de la source d'énergie électrique (20) ;
dans lequel la valeur de sortie admissible du côté des plus grandes vitesses de véhicule ou du côté des plus grandes vitesses de rotation de la source d'énergie électrique (20) en mode de fonctionnement EV du côté de la région des plus petites vitesses de véhicule ou de la région des plus petites vitesses de rotation de la source d'énergie électrique (20), en tant que l'un des modes adjacents de fonctionnement EV, est plus grande que la valeur prédéterminée ; et
dans lequel la valeur de sortie admissible du côté des plus petites vitesses de véhicule ou du côté des plus petites vitesses de rotation de la source d'énergie électrique (20) en mode de fonctionnement EV du côté de la région des plus grandes vitesses de véhicule ou de la région des plus grandes vitesses de rotation de la source d'énergie électrique (20), en tant que l'un des modes adjacents de fonctionnement EV, est plus grande que la valeur prédéterminée.

2. Système de commande (1) selon la revendication 1, dans lequel la valeur prédéterminée est égale à 0 ou presque 0.

3. Système de commande selon la revendication 2, dans lequel la valeur de sortie admissible de la source d'énergie électrique (20) entre les modes adjacents de fonctionnement EV est égale à 0 ou presque 0 dans une plage prédéterminée de vitesses de véhicule ou une plage prédéterminée de vitesses de rotation de la source d'énergie électrique (20).

4. Système de commande (1) selon la revendication 1, dans lequel la valeur de sortie admissible de la source d'énergie électrique (20) en mode de fonctionnement EV du côté de la région des plus petites vitesses de véhicule ou de la région des plus petites vitesses de rotation de la source d'énergie électrique (20), en tant que l'un des modes adjacents de fonctionnement EV, est réduite à 0 ou presque 0, au niveau du côté des plus grandes vitesses de véhicule ou du côté des plus grandes vitesses de rotation de la source d'énergie électrique (20) du mode de fonctionnement EV du côté de la région des plus petites vitesses de véhicule ou de la région des plus petites vitesses de rotation, à mesure que la vitesse de véhicule ou la vitesse de rotation de la source d'énergie électrique (20) approche d'une vitesse de limite supérieure de véhicule ou d'une vitesse de limite supérieure de rotation de la source d'énergie électrique (20) en mode de fonctionnement EV du côté de la région des plus petites vitesses de véhicule ou de la région des plus petites vitesses de rotation.

5. Système de commande (1) selon la revendication 4, dans lequel la valeur de sortie admissible de la source d'énergie électrique (20) en mode de fonctionnement EV du côté de la région des plus grandes vitesses de véhicule ou de la région des plus grandes vitesses de rotation de la source d'énergie électrique (20), en tant que l'un des modes adjacents de fonctionnement EV, augmente à partir de 0 ou presque 0, au niveau du côté des plus petites vitesses de véhicule ou du côté des plus petites vitesses de rotation de la source d'énergie électrique (20) du mode de fonctionnement EV du côté de la région des plus grandes vitesses de véhicule ou de la région des plus grandes vitesses de rotation, à mesure que la vitesse de véhicule ou la vitesse de rotation de la source d'énergie électrique (20) augmente à partir d'une vitesse de limite inférieure de véhicule ou d'une vitesse de limite inférieure de rotation de la source d'énergie électrique (20) en mode de fonctionnement EV du côté de la région des plus grandes vitesses de véhicule ou de la région des plus grandes vitesses de rotation.

6. Système de commande selon l'une quelconque des revendications 1 à 5, dans lequel le véhicule inclut seulement un moteur/générateur (20) comme source d'énergie électrique (20).
